# EUROPEAN PATENT SPECIFICATION

(11) **EP 3 661 772 B1**
(45) Date of publication and mention of the grant of the patent: **09.12.2026**
(21) Application number: 18841108.6
(22) Date of filing: 27.07.2018
(51) Int. Cl.: B60G 7/00, B62K 5/02, B62K 5/027, B62K 5/05, B62K 5/06, B62K 25/04, B62K 25/12, B62K 25/14, B62K 25/20, B62K 25/28

(54) **SUSPENSION ASSEMBLY FOR A VEHICLE**
AUFHÄNGUNGSANORDNUNG FÜR EIN FAHRZEUG
ENSEMBLE DE SUSPENSION POUR UN VÉHICULE

(30) Priority: 31.07.2017 US 201762539023 P
(43) Date of publication of application: 10.06.2020
(73) Proprietor: Bombardier Recreational Products Inc., Valcourt, Québec J0E 2L0 (CA)
(72) Inventor: HEBERT, Sebastien, Sherbrooke, Québec J1N 0S1 (CA); MALTAIS-LAROUCHE, Emile, Valcourt, Québec J0E 2L0 (CA)
(74) Representative: BCF Global
(86) International application number: PCT/IB2018/055650
(87) International publication number: WO 2019/025926

(56) References cited:
- JP-A- 2004 352 209
- JP-B1- 6 153 049
- US-A- 4 379 567
- US-A- 4 415 057
- US-A- 4 489 803
- US-A- 4 596 302
- US-A- 4 830 391
- US-A- 6 024 185
- US-A1- 2004 195 799
- US-A1- 2005 116 437
- US-A1- 2008 179 852
- US-A1- 2016 096 583
- US-E- R E34 897

## Description

### FIELD OF TECHNOLOGY

The present technology relates to a suspension assembly for a three-wheeled vehicle.

### BACKGROUND

Three-wheeled straddle-seat vehicles have been developed for road use with a desire to combine the riding qualities experienced in four wheeled automobiles and two wheeled motorcycles.

For example, automobiles are inherently more stable than motorcycles due to the presence of four wheels, but motorcycles have greater maneuverability due to the smaller size and weight of motorcycles. Three-wheeled straddle-seat vehicles are more stable than motorcycles while providing a similar driving experience. Three-wheeled straddle-seat vehicles are therefore quite popular for touring and sport purposes.

For vehicle stability, it is desirable to have a low center of gravity. One limiting factor in lowering the center of gravity in three-wheeled vehicles is their suspension assemblies. In particular, vehicles having two front wheels and a single rear wheel typically have a suspension assembly that includes a rear swing arm with a generally vertical shock absorber (i.e., a "swing arm suspension assembly") to which a single laterally central wheel is mounted. The swing arm suspension assembly can be bulky and its configuration can impede lowering the center of gravity of the vehicle.

Furthermore, the performance of the shock absorber is typically correlated to the cost of the shock absorber and it can thus be expensive to implement a shock absorber that offers a desired performance.

There is therefore a desire for a vehicle having a suspension assembly with a low center of gravity and offering good performance.

U.S. Patent No. 6,024,185 discloses a crankcase for a motorcycle divided into an upper half and a lower half. A crankshaft, a main shaft, a counter shaft, and a pivot portion are arranged substantially on a straight line along a parting plane of the crankcase. An eccentric cam and a pivot collar are disposed in the pivot portion, and a rear swing arm is connected to the pivot shaft. The upper half and lower half are vertically mated to each other in front of and behind the pivot portion and then vertically fastened to each other. The center of the pivot collar is offset downwardly from the parting plane. The document US 6 024 185 A discloses a suspension assembly for a three-wheeled straddle-type vehicle according to the preamble of claim 1.
US RE.34,897 discloses a suspension device for motorcycles, in which the rear wheel is rotatively supported by rear ends of right and left side swing arms front ends of which are pivotally connected to rear low-portion of the vehicle frame, one end of a link lever pivotally supported at its center portion by rear upper-portion of the frame is pivotally connected to the swing arms via a rod member at each side of the rear wheel and other end of said link lever is pivotally connected to upper end of a spring member, and lower end of said spring member is pivotally connected to a position of each swing arm.
US 2005/116437 discloses a suspension apparatus of a vehicle comprising a base end portion of a swing arm pivotally attached to a vehicle body so as to freely oscillate, and a wheel which is rotatably supported to a leading end portion of the swing arm. A first link is pivotally attached to a portion between the base end portion and the leading end portion of the swing arm. A second link is pivotally attached to a position which is below a pivot point to which the base end portion of the swing arm is pivotally attached in the vehicle body, and the first link and the second link are pivotally attached. One end of a cushion unit is pivotally attached to the vehicle body. Another end of the cushion unit is pivotally attached to one of the first link and the second link, in which the first link or the second link comprises an expandable link. The expandable link is energized in a contracting direction.
US 4,830,391 discloses a motor cycle rear wheel suspension linkage to provide a rising rate suspension comprising a link pivotally attached to a motor cycle frame and to a shock absorber. A roller mounted on the rear wheel swing arm engages in a cam slot in the link.
JP 2004/352209 discloses a swing arm type suspension device comprising a top end of a cushion unit is mounted on a vehicle body side via a top link mechanism. The top link mechanism comprises a top arm connected with a top end of the cushion unit on one end and with a top of a swing arm on the other end, and a top rod crossing across the top arm and the vehicle body side. A front end of the top rod is connected with a portion above a pivot shaft on the vehicle body side, and a rear end of the top rod positioned backward on the vehicle body side is connected with an approximately intermediate part of the top arm.

### SUMMARY

It is an object of the present technology to ameliorate at least some of the inconveniences described above.

According to the present invention, there is provided a suspension assembly for a three-wheeled straddle-type vehicle according to claim 1. The suspension assembly has a swing arm having a proximal end pivotally connected to a frame of the vehicle and a distal end supporting a ground-engaging member of the vehicle. The suspension assembly also includes a rocker link, a linking arm and a shock absorber which are pivotally connected between the swing arm and the frame to control motion of the swing arm relative to the frame of the vehicle. The linkage system that is constituted by the rocker link, the linking arm and the shock absorber is advantageously compact and configured to lower a center of gravity of the vehicle compared to similar conventional suspension assembly designs.

In some implementations, when the suspension assembly is in a driver loaded state, a distance between the first linking arm pivot axis and the second linking arm pivot axis is greater than a distance between the first shock absorber pivot axis and the second shock absorber pivot axis.

In some implementations, independent of a load state of the suspension assembly, an axis passing through the second shock absorber pivot axis and the second linking arm pivot axis extends more vertically than horizontally.

In some implementations, the first linking arm pivot axis is vertically higher than the swing arm pivot axis.

In some implementations, an axis extending through the first shock absorber pivot axis and the second shock absorber pivot axis intersects the first linking arm pivot axis.

In some implementations, the shock absorber extends generally horizontally in a full bump state of the suspension assembly.

In some implementations, the shock absorber and the rocker link form an acute angle in a full droop state of the suspension assembly.

In some implementations, the shock absorber has a damper and a spring.

In some implementations, the swing defines a hollow space, and the rocker link, the linking arm and the shock absorber at least partially extend within the hollow space.

In some implementations, the shock absorber is disposed above the linking arm.

In some implementations, the rocker link and the linking arm form an acute angle.

In some implementations, the second portion of the rocker link is vertically above the first portion of the rocker link.

In some implementations, the rocker link, the linking arm and the shock absorber extend through a common vertical plane.

According to a second aspect, there is provided a three-wheeled straddle-type vehicle according to claim 9.

In some implementations, the vehicle has a muffler that extends below the rocker link, the linking arm and the shock absorber.

In some implementations, the ground-engaging member of the vehicle is a wheel having a wheel rotations axis. The swing arm pivot axis and the wheel rotations axis extend along a plane, and the linking arm extends across the plane.

For the purposes of the present application, terms related to spatial orientation such as forward, rearward, front, rear, upper, lower, left, and right, are as they would normally be understood by a driver of the vehicle sitting therein in a normal driving position with the vehicle being upright and steered in a straight ahead direction.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a right side elevation view of a vehicle according to the present technology;
Figure 2 is a top plan view of the vehicle of Figure 1;
Figure 3 is a left side elevation view of a portion of a powertrain and a rear wheel of the vehicle of Figure 1;
Figure 4 is a rear, right side perspective view of the vehicle of Figure 1 with certain components removed to expose part of a frame and a rear suspension assembly of the vehicle of Figure 1;
Figures 5 and 6 are top and bottom plan views respectively of the vehicle as shown in Figure 4;
Figures 7 and 8 are right and left side elevation views respectively of the vehicle as shown in Figure 4;
Figure 9 is a cross-sectional view of the vehicle as indicated in Figure 5;
Figure 10 is a rear, right side perspective view of the rear suspension assembly of the vehicle of Figure 1;
Figure 11 is a top plan view of the rear suspension assembly of Figure 10;
Figures 12 and 13 are right and left side elevation views respectively of the rear suspension assembly of Figure 10;
Figure 14 is a rear, right side perspective view of a linkage subassembly of the rear suspension assembly;
Figure 15 is a top plan view of the linkage subassembly of Figure 14;
Figure 16 is a detail view of a portion of the cross-sectional view of the vehicle shown in Figure 9;
Figure 17 is a cross-sectional right side elevation view of the vehicle as shown in Figure 4 showing the rear suspension assembly in a full bump state;
Figure 18 is a cross-sectional right side elevation view of the vehicle as shown in Figure 4 showing the rear suspension assembly in a full droop state; and
Figure 19is a schematic right side elevation view of an alternate implementation of the linkage subassembly of the rear suspension assembly.

It should also be noted that, unless otherwise explicitly specified herein, the drawings are not necessarily to scale.

### DETAILED DESCRIPTION

The present technology will be described herein with respect to a three-wheeled straddle-type vehicle 10. It is contemplated that at least some aspects of the present technology could also be implemented with vehicles having two, four, or more wheels. The present technology will be described herein with respect to a rear swing arm suspension assembly, although it is contemplated that at least some aspects of the present technology could also be implemented in a front swing arm suspension assembly.

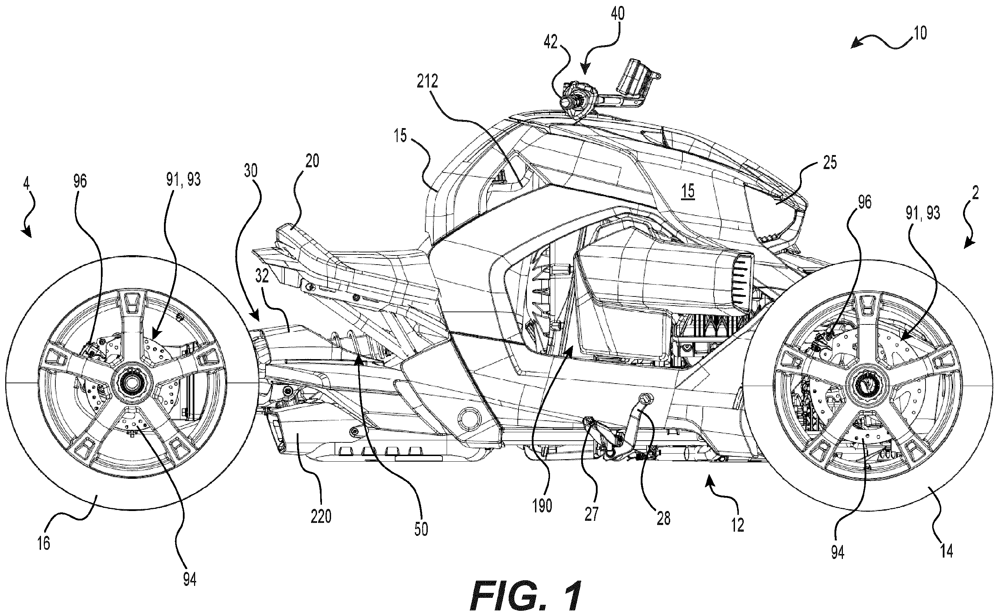

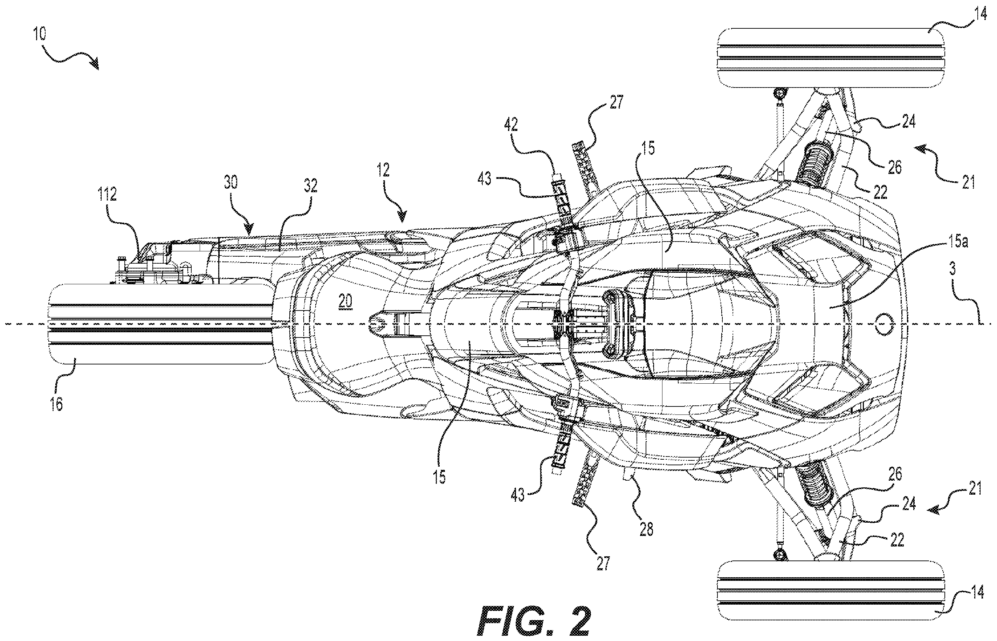

With reference to Figures 1 and 2, a vehicle 10 has a front end 2, a rear end 4, and a longitudinal centerplane 3 defined consistently with the forward travel direction of the vehicle 10. The vehicle 10 has a frame 12 on which various components of the vehicle 10 are supported.

The vehicle 10 is a three-wheeled vehicle including a left front wheel 14 mounted to the frame 12 by a left front suspension assembly 21 and a right front wheel 14 mounted to the frame 12 by a right front suspension assembly 21. The vehicle 10 also comprises single rear wheel 16 supported by a rear suspension assembly 30 of the vehicle 10. The left and right front wheels 14 and the rear wheel 16 each have a tire secured thereto. The front wheels 14 are disposed equidistant from the longitudinal centerplane 3, and the rear wheel 16 is centered with respect to the longitudinal centerplane 3. It is contemplated that aspects of the present technology could also be implemented on a vehicle with two rear wheels 16 and a single, centered front wheel 14.

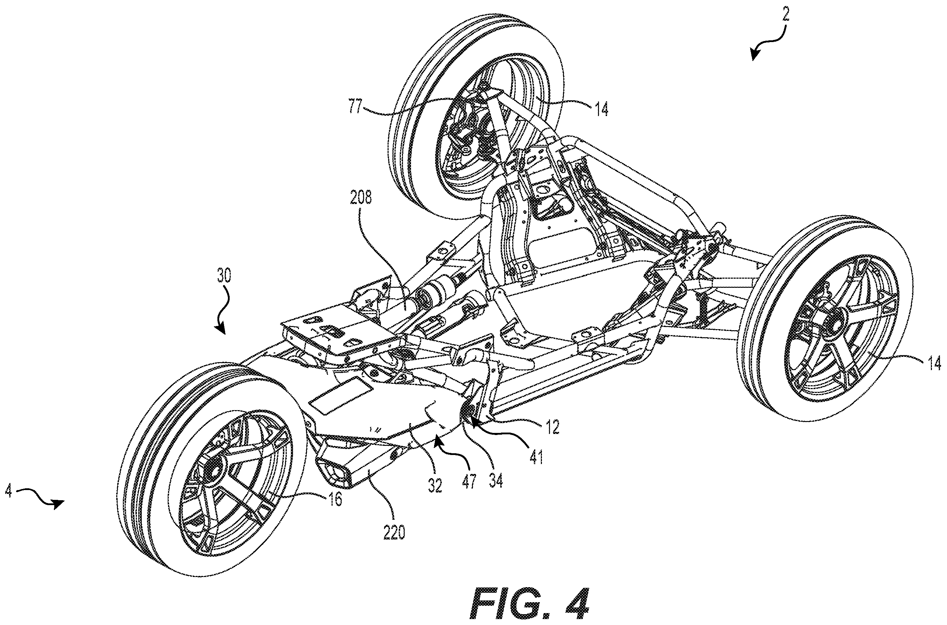

In the illustrated implementation and as can be seen in Figure 2 and 4, each front suspension assembly 21 is a double A-arm type suspension, also known as a double wishbone suspension. It is contemplated that other types of suspensions, such as a McPherson strut suspension, or a swing arm suspension could be used. Each front suspension assembly 21 includes an upper A-arm 22, a lower A-arm 24 and a shock absorber 26. The right front suspension assembly 21 is a mirror image of the left front suspension assembly 21, and as such only the left front suspension assembly 21 will be described herein. Each A-arm 22, 24 has a front member and a rear member. The laterally outer ends of the front and rear members are connected to each other while the laterally inner ends of the front and rear members of each A-arm 22, 24 are spaced apart from each other.

The lower end of the shock absorber 26 is connected to the front and rear members of the lower A-arm 24 slightly laterally inward of the laterally outer ends. The laterally inner ends of the upper and lower A-arms 22, 24 are pivotally connected to the frame 12. As can be seen in Figure 4, the laterally outer ends of the upper and lower A-arms 22, 24 are pivotally connected to the top and bottom respectively of a knuckle 77. The front wheel 14 is connected to a spindle that is connected to the knuckle 77.

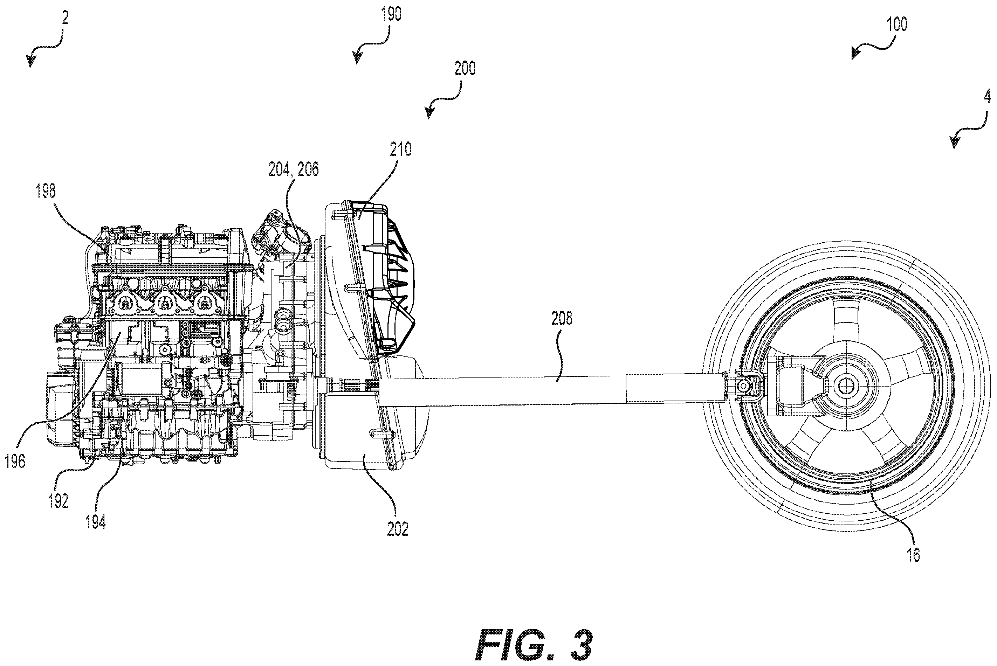

As shown in Figure 4, the rear suspension assembly 30 comprises a swing arm 32 that is pivotally mounted at a proximal end 34 thereof to the frame 12. The rear wheel 16 is rotatably mounted to a distal end 36 of the swing arm 32 which extends on a left side of the rear wheel 16. More specifically, the rear wheel 16 is rotatable about a wheel rotation axis 110 via a final drive unit 112 affixed (e.g., fastened) to the distal end 36 of the swing arm 32 that receives the distal end of a driveshaft 208 (see Figure 4) and the gears associated therewith for providing motive power to the rear wheel 16. With reference to Figures 3, 4, 17 and 18, the driveshaft 208 extends from the power pack 190 to the final drive unit 112, passing in part through the swing arm 32. As will be described in more detail below, the rear suspension assembly 30 comprises a linkage subassembly connected between the swing arm 32 and the frame 12.

The vehicle 10 has a straddle seat 20 mounted to the frame 12 and disposed along the longitudinal centerplane 3. In the illustrated implementation, the straddle seat 20 is intended to accommodate a single adult-sized rider, *i.e.* the driver. It is however contemplated that a passenger seat portion could be connected to the frame 12 in order to accommodate a passenger behind the driver.

A driver footrest 27 is disposed on either side of the vehicle 10 and vertically lower than the straddle seat 20 to support the driver's feet (see Figures 1 and 2). The driver footrests 27 are connected to the frame 12. In the implementation of the vehicle 10 illustrated herein, the driver footrests 27 are in the form of foot pegs disposed longitudinally forward of the straddle seat 20. It is also contemplated that the footrests 27 could be in the form of footboards. It is contemplated that the vehicle 10 could also be provided with one or more passenger footrests disposed rearward of the driver footrest 27 on each side of the vehicle 10, for supporting a passenger's feet when a passenger seat portion for accommodating a passenger is connected to the vehicle 10. A brake pedal 28 is connected to the right driver footrest 27 for braking the vehicle 10. The brake pedal 28 extends upwardly and forwardly from the right driver footrest 27 such that the driver can actuate the brake pedal 28 with a front portion of the right foot while a rear portion of the right foot remains on the right driver footrest 27.

The vehicle 10 includes a steering assembly 40. A handlebar 42, which is part of the steering assembly 40, is disposed in front of the seat 20. The handlebar 42 is used by the driver to turn the front wheels 14 to steer the vehicle 10. A left hand grip 43 is placed around the left side of the handlebar 42 near the left end thereof and a right hand grip 43 is placed around the right side of the handlebar 42 near the right end to facilitate gripping for turning the handlebar 42 and thereby steering the vehicle 10. The right hand grip 43 provides twist-grip type throttle control. It is contemplated that the brake pedal 28 could be positioned on the opposite lateral side of the vehicle 10 or replaced with a brake lever at either the left or right hand grips 43.

A central portion of the handlebar 42 is connected to an upper end of a steering column (not shown). From the handlebar 42, the steering column 44 extends downwardly and leftwardly. The steering column is rotatably supported by the frame 12. A bottom portion of the steering column is operatively connected to the front wheels 14 for steering the vehicle 10. In implementations of a vehicle having a single front wheel, the steering column could be differently implemented, for example in the form of a triple clamp.

As can be seen in Figures 1 and 3, the vehicle 10 includes a power pack 190, including a motor 192 and a transmission assembly 200. The transmission assembly 200 includes a continuously variable transmission (CVT) 202 and a transfer case 204 in the present implementation. The power pack 190 is supported by the frame 12. In the illustrated implementation of the vehicle 10, the motor 192 is in the form of an internal combustion engine. It is however contemplated that the motor 192 could be other than an internal combustion engine, for example an electric motor, a hybrid or the like. The motor 192 will be referred to hereinafter as engine 192 for convenience. The engine 192 is operatively connected to the rear wheel 16 to drive the rear wheel 16.

As can be seen in Figure 3, the engine 192 has a crankcase 194, a cylinder block 196 disposed on and connected to the crankcase 194, and a cylinder head assembly 198 disposed on and connected to the cylinder block 196. Further detail regarding engines, such as the engine 192, can be found in United States Patent No. 8,393,306 B2, issued on March 12, 2013, the entirety of which is incorporated herein by reference.

The rear wheel 16 is operatively connected to a crankshaft (not shown) of the engine 192 via an engine output shaft (not shown), the CVT 202, the transfer case 204 and the driveshaft 208. It is contemplated that the engine 192 could be connected to the front wheels 14 instead of, or in addition to, the rear wheel 16. The engine 192, the CVT 202, the transfer case 204 and the driveshaft 208 form part of a vehicle powertrain 100. Power produced by the engine 192 is transmitted to the CVT 202, then to the transfer case 204, which in turn drives the driveshaft 208 to turn the rear wheel 16.

As can be seen in Figure 3, the transfer case 204 is disposed rearward of the engine 192. The transfer case 204 includes a transfer case housing 206 which is mounted to the rear end of the engine 192 via the cylinder block 196 and the crankcase 194. The CVT 202 is disposed rearward of the transfer case 204 and includes a CVT housing 210. It is contemplated that the vehicle 10 could have a transmission assembly 200 in which the CVT 202 and the transfer case 204 are replaced by a discrete gear transmission or another type of manual, semi-automatic or automatic transmissions.

A front end of the driveshaft 208 is enclosed by the transfer case housing 206. The driveshaft 208 extends longitudinally and rearwardly out of the transfer case housing 206 on a left side of the longitudinal centerplane 3. The rear end of the driveshaft 208 is operatively connected to the rear wheel 16 (via the final drive unit 112) to drive the rear wheel 16 without inhibiting motion of the rear wheel 16 about the rear suspension assembly 30 as the vehicle 10 moves over uneven terrain. It is contemplated that the driveshaft 208 could be omitted and the transfer case 204 could be connected to the rear wheel 16 via a chain, belt, or other transmission assembly instead of the driveshaft 208.

Turning back to Figures 1 and 2, the vehicle 10 includes body panels 15 which are connected to and supported by the frame 12. The body panels 15 enclose and protect the internal components of the vehicle 10 such as the engine 192. The body panels 15 include a hood 15a disposed at the front of the vehicle 10 between the front wheels 14. The vehicle 10 also includes headlights 25 connected to and supported by the frame 12.

As can be seen in Figure 1, a fuel tank 212 disposed behind the CVT 202 supplies fuel to the engine 192. The straddle seat 20 is disposed longitudinally rearward of the fuel tank 212. The fuel tank 212 is connected to and supported by the frame 12. The fuel tank 212 includes a fuel filler neck opening.

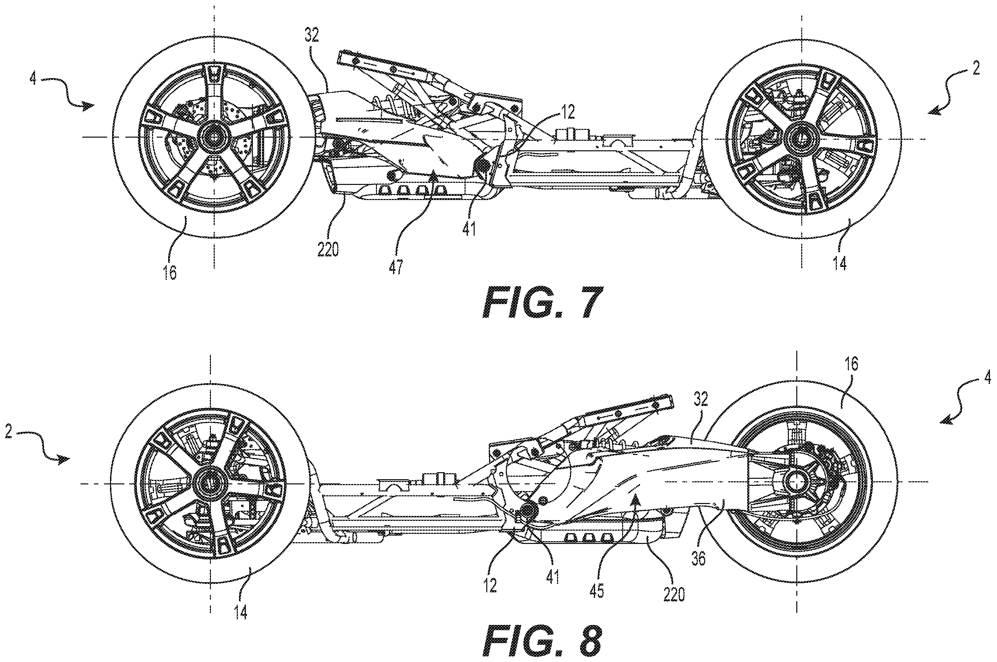

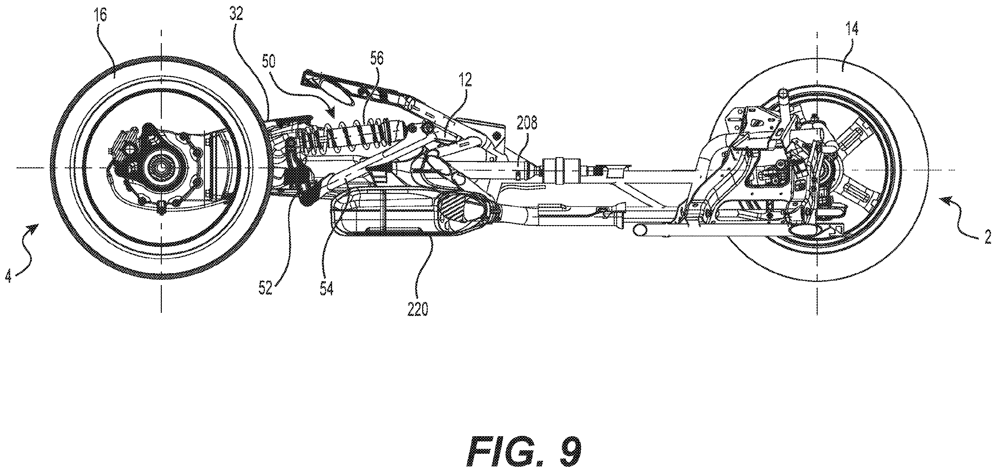

As can be seen in Figures 1, 4, and 6 to 9, the vehicle 10 also includes an exhaust system fluidly connected to the engine 192, which includes a muffler 220. The engine 192 is fluidly connected to an exhaust manifold and an exhaust conduit (not shown) extending longitudinally and rearwardly from the engine 192. The exhaust conduit fluidly connects to the muffler 220 disposed generally below the seat 20. In the illustrated implementation, the muffler 220 is laterally centered with respect to the longitudinal centerplane 3. The muffler 220 is fastened to a muffler bracket of the frame 12. It is however contemplated that the muffler 220 could not be aligned with the seat 20 in the lateral and/or longitudinal directions. It is contemplated that the muffler 220 could not be laterally centered with respect to the longitudinal centerplane 3.

With reference to Figure 1, each of the two front wheels 14 and the rear wheel 16 is provided with a brake assembly 91. The brake assemblies 91 of the three wheels 14, 16 form a brake system 93. Each brake assembly 91is a disc-type brake mounted onto the spindle of the respective wheel 14 or 16. Other types of brakes are contemplated. Each brake assembly 91includes a rotor 94 mounted onto the final drive unit 112 and a stationary caliper 96 straddling the rotor 94. The brake pads (not shown) are mounted to the caliper 96 so as to be disposed between the rotor 94 and the caliper 96 on either side of the rotor 94. The brake pedal 28 is operatively connected to the brake assemblies 91provided on each of the two front wheels 14 and the rear wheel 16.

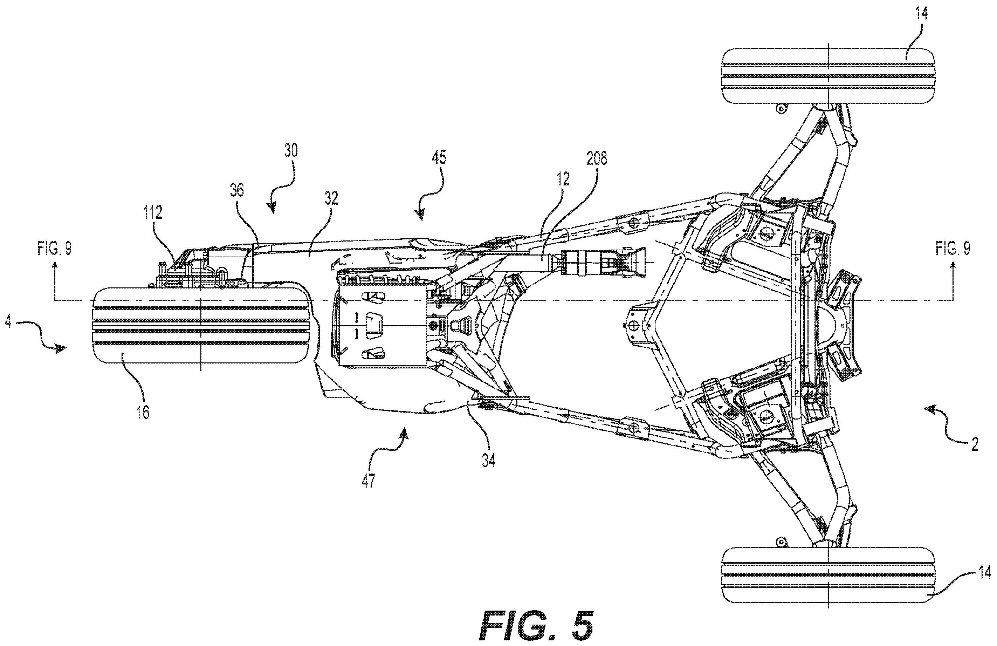

The configuration of the rear suspension assembly 30 and the manner in which it operates will now be described in more detail with reference to Figures 4 to 18.

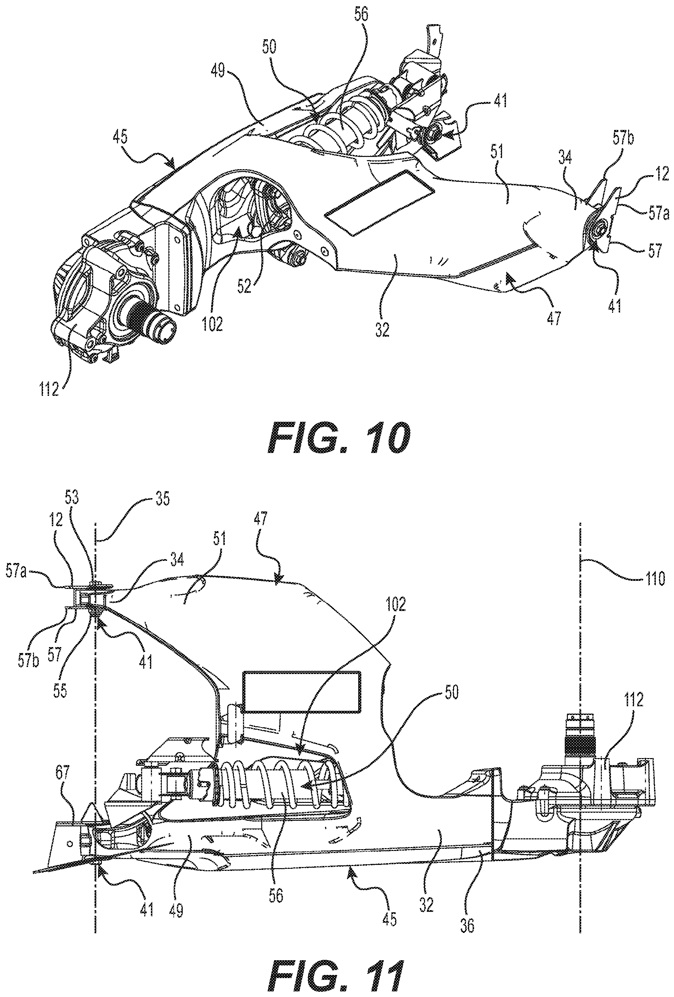

The swing arm 32 of the rear suspension assembly 30 is pivotally connected at its proximal end 34 to the frame 12 about a swing arm pivot axis 35 that extends laterally. More specifically, the swing arm 32 comprises a pair of swing arm extensions 49, 51 that are each pivotally connected to the frame 12 via a respective swing arm pivot 41 to define the swing arm pivot axis 35. The swing arm extensions 49, 51 are disposed on left and right lateral sides 45, 47 of the swing arm 32 respectively. The swing arm pivots 41 may be configured in any suitable way. For example, with reference to Figures 10 and 11, in this implementation, a bracket 57 of the frame 12 receives a portion of the swing arm extension 51 between two flanges 57a, 57b of the bracket 57. A fastener 53 (e.g., a bolt) extends through the flanges 57a, 57b and the swing arm extension 51 and a fastener retaining member 55 (e.g., a nut) secures the fastener 53 in place. As shown in Figure 11, the swing arm extension 49 is similarly connected to a bracket 67 of the frame 12. T he swing arm 32 of the illustrated implementation is a mono swing arm, or single sided swing arm, which extends along and connects, via the final drive unit 112, to only one side of the rear wheel 16, although other types of swing arms are contemplated.

The linkage subassembly 50 of the rear suspension assembly 30 is connected between the frame 12 and the swing arm 32. The linkage subassembly 50 comprises three members (which may be thought of as "links") including a rocker link 52, a linking arm 54 and a shock absorber 56 which, in a manner that will be explained in detail below, work together to control movement of the swing arm 32 relative to the frame 12 of the vehicle 10.

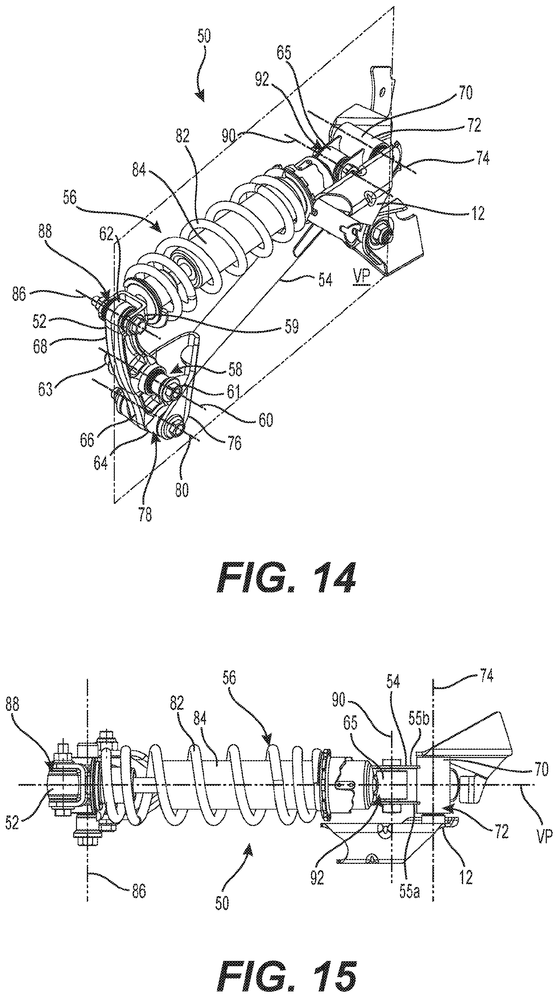

As best seen in Figures 14 to 16, the rocker link 52 is pivotally connected to the swing arm 32 about a rocker link pivot axis 60 that extends laterally and is defined by a rocker link pivot 58. The rocker link pivot 58 is located away from ends 62, 64 of the rocker link 52 such that the rocker link 52 has a first portion 66 and a second portion 68 which extend in divergent (e.g., opposite) directions from the rocker link pivot 58. The rocker link pivot 58 may be configured in any suitable way. For example, in this implementation, an opening of the rocker link 52 is configured to receive a fastener 61 (e.g., a bolt) that also engages an opening of the swing arm 32 such that the rocker link 52 can pivot about the rocker link pivot axis 60. The fastener 61 is secured in place by a corresponding fastener receiving member 63 (e.g., a nut). The rocker link pivot 58 may be established in any other suitable way in other implementations. For instance, any other securing element may be used instead of a fastener (e.g., a pin). It is also contemplated that the rocker link pivot 58 could have a bearing to facilitate the pivoting motion of the rocker link 52 relative to the swing arm 32.

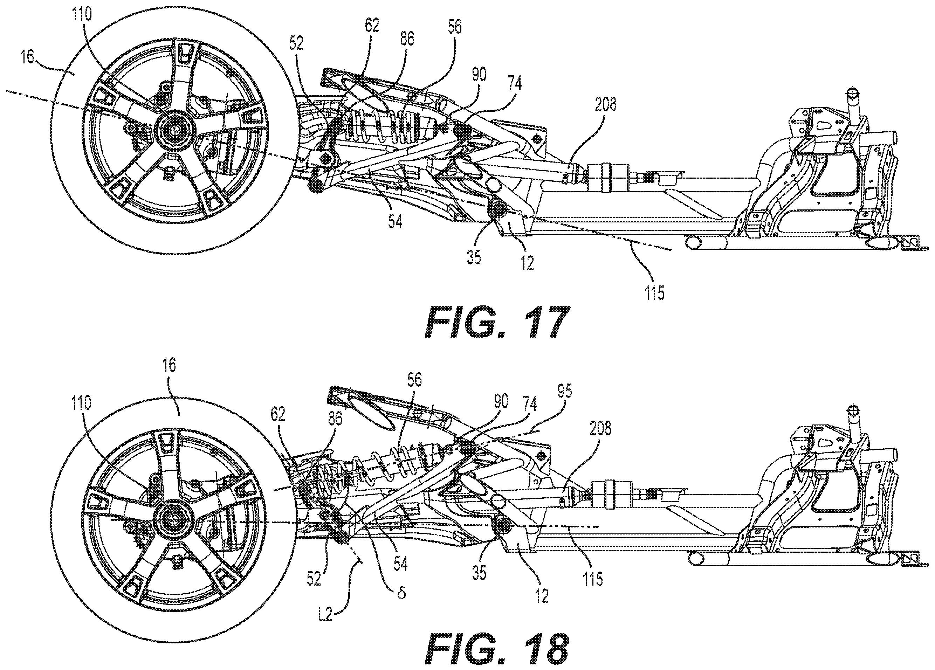

The linking arm 54 is pivotally connected to the frame 12 and to the rocker link 52. More specifically, an end portion 70 of the linking arm 54 is pivotally connected to the frame 12 about a linking arm pivot axis 74 that extends laterally. As best seen in Figures 17 and 18, in this implementation, the linking arm pivot axis 74 is vertically higher than the swing arm pivot axis 35. Moreover, the linking arm 54 is positioned, vertically, between the muffler 220 and the shock absorber 56 thus separating the muffler 220 from the shock absorber 56. This may protect the shock absorber 56 from the heat emanated by the muffler 220. An opposite end portion 76 of the linking arm 54 is pivotally connected to the first portion 66 of the rocker link 52 about a linking arm pivot axis 80 that extends laterally. The linking arm pivot axes 74, 80 are defined by linking arm pivots 72, 78 respectively. The linking arm pivots 72, 78 may be configured in any suitable manner. For instance, in this example, the end portion 70 of the linking arm 54 is positioned between two portions of the frame 12 and a fastener (such as the fastener 61) extends through the frame 12 and the end portion 70 to establish the linking arm pivot 72. The fastener is secured in place by a fastener receiving member (e.g., a nut). Moreover, in this example, the end portion 76 of the linking arm 54 is formed as a clevis which receives the end 64 of the rocker link 52 therebetween. A fastener (such as the fastener 61) extends through the clevis of the end portion 76 and engages a corresponding opening in the rocker link 52 to establish the linking arm pivot 78. The fastener is secured in place by a fastener receiving member (e.g., a nut).

The shock absorber 56 is configured to provide shock absorption to the rear suspension assembly 30. To that end, the shock absorber 56 comprises a spring 82 and a damper 84 mounted coaxially to one another. In this implementation, the spring 82 has a constant spring rate such that the spring 82 is configured to deflect a same amount for a given force throughout its range of deflection.

The shock absorber 56 is pivotally connected to the rocker link 52 and to at least one of the linking arm 54 and the frame 12. More particularly, in this implementation, an end portion 59 of the shock absorber 56 is pivotally connected to the second portion 68 of the rocker link 52 about a shock absorber pivot axis 86 that extends laterally. The shock absorber pivot axis 86 is defined by a shock absorber pivot 88 established between the rocker link 52 and the shock absorber 56. The shock absorber pivot 88 may be configured in any suitable way. For instance, with reference to Figure 15, in this example, the end portion 59 of the shock absorber 56 constitutes a clevis end which receives the end 62 of the rocker link 52. A fastener (such as the fastener 61) is inserted through the clevis end of the shock absorber 56 and the end 62 of the rocker link 52. The fastener is secured in place by a fastener receiving member (e.g., a nut). The shock absorber pivot 88 may be configured in any other suitable way in other implementations.

**In** this implementation, an opposite end portion 65 of the shock absorber 56 is pivotally connected to the linking arm 54 about a shock absorber pivot axis 90 that extends laterally. As such, the shock absorber pivot axis 90 is offset from the linking arm pivot axis 74. The shock absorber pivot axis 90 is defined by a shock absorber pivot 92 established between the shock absorber 56 and the linking arm 54. The shock absorber pivot 92 may be configured in any suitable way. For instance, in this example, the end portion 65 of the shock absorber 56 is positioned between a pair of flanges 55a, 55b of the linking arm 54. A fastener (such as the fastener 61) is inserted through a mounting hole of the end portion 65 and through corresponding holes in the flanges 55a, 55b. The fastener is secured in place by a fastener receiving member (e.g., a nut). The shock absorber pivot 92 may be configured in any other suitable way in other implementations.

Thus, when the swing arm 32 pivots upwardly with respect to the frame 12 (e.g., when the rear wheel 16 climbs over an obstacle in its path), the linking arm 54 causes the rocker link 52 to pivot about the rocker link pivot axis 60 such that the end 62 of the rocker link 52 moves forwardly with respect to the swing arm 32. This causes compression of the shock absorber 56 as a distance between the shock absorber pivot axes 86, 90 decreases. For example, Figure 17 illustrates such a movement of the swing arm 32 and the linkage subassembly 50. In particular, Figure 17 shows the suspension assembly 30 in a "full bump" state in which the shock absorber 56 is compressed at its maximum (i.e., the distance between the shock absorber pivot axes 86, 90 is at its minimum). By way of contrast, Figures 4 to 9 show the suspension assembly 30 in a "driver loaded" state in which an average driver is seated on the vehicle 10 with the vehicle 10 at rest on level ground.

On the other hand, when the swing arm 32 pivots downwardly with respect to the frame 12 (e.g., when the rear wheel 16 encounters a depression in its path), the linking arm 54 causes the rocker link 52 to pivot about the rocker link pivot axis 60 such that the upper end 62 of the rocker link 52 moves rearwardly. This causes extension of the shock absorber 56 as the distance between the shock absorber pivot axes 86, 90 increases. For example, Figure 18 illustrates such a movement of the swing arm 32 and the linkage subassembly 50. In particular, Figure 18 shows the suspension assembly 30 in a "full droop" state in which the shock absorber 56 is extended at its maximum (i.e., the distance between the shock absorber pivot axes 86, 90 is at its maximum).

As such, the swing arm 32 is capable of pivoting significantly relative to the frame 12 about the swing arm pivot axis 35. For example, in this implementation, the swing arm 32 can pivot a total of 12.5° about the swing arm pivot axis 35 from the full droop state to the full bump state of the suspension assembly 30.

The linkage subassembly 50 may be configured to optimize performance of the shock absorber 56 in a relatively inexpensive manner.

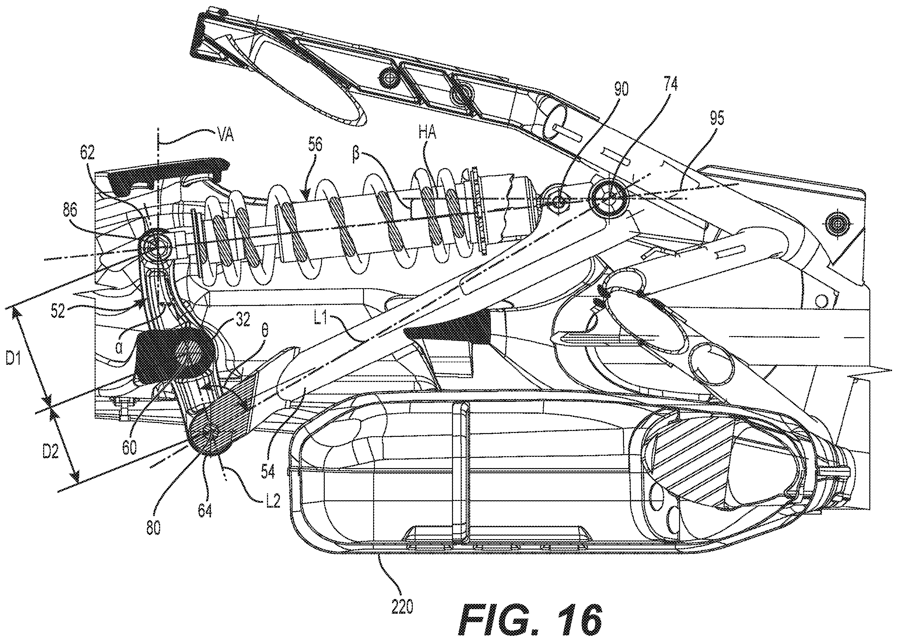

As shown in Figure 16, a distance D1 between the shock absorber pivot axis 86 and the rocker link pivot axis 60 is different from a distance D2 between the linking arm pivot axis 80 and the rocker link pivot axis 60. According to the invention, the distance D1 is greater than the distance D2 such that, for a given rotation of the rocker link 52 about the rocker link pivot axis 60, the upper end 62 of the rocker link 52 moves a greater distance than the lower end 64 of the rocker link 52. Moreover, a distance between the linking arm pivot axes 74, 80 is configured to be greater than a distance between the shock absorber pivot axes 86, 90 in the driver loaded state.

Furthermore, an angle θ formed between the rocker link 52 and the linking arm 54 is configured to be relatively small. More specifically, the angle θ is formed between a line L1 and a line L2 which respectively extend between (i) the linking arm pivot axes 74, 80, and (ii) the linking arm pivot axis 80 and the shock absorber pivot axis 86. The angle θ is no more than 90° (i.e., 90° or less) independently of the load state of the suspension assembly 30. The angle θ is an acute angle in the driver loaded and full bump states of the suspension assembly 30.

Furthermore, as shown in Figure 18, an angle δ formed between the rocker link 52 and the shock absorber 56 is also configured to be relatively small, in particular in the full droop state of the suspension assembly 30. More specifically, the angle δ is formed between the line L2 and an axis 95 which respectively extend between (i) the linking arm pivot axis 80 and the shock absorber pivot axis 86, and (ii) the shock absorber pivot axes 86, 90. The angle δ is less than 90° (i.e., acute) in the full droop state of the suspension assembly 30.

This geometrical configuration of the linkage subassembly 50 may allow the shock absorber 56 to be compressed at a greater rate than if the shock absorber 56 were affixed directly between the frame 12 and the swing arm 32 as is typically the case in conventional suspension designs. In turn, given the greater rate of compression of the spring 82, the rear suspension assembly 30 exhibits a "rising" spring rate. In other words, as the suspension assembly 30 becomes harder to compress the more it is compressed, it is less likely to bottom out (i.e., travel its maximal compression limit). Thus, while the spring 82 of the shock absorber 56 has a constant (i.e., linear) spring rate, the linkage subassembly 50 behaves as having a spring with nonlinear spring rate that rises as the shock absorber 56 compresses. This may thus afford the benefits of a spring with a nonlinear spring rate (e.g., a progressive rate springs, variable rate springs, dual rate springs, etc.) without the added cost that is associated with such a spring. In addition, in this implementation, the vehicle 10 exhibits a "motion ratio" (i.e., a ratio of the displacement of the shock absorber 56 over the displacement of the rear wheel 16) that is greater than if the shock absorber 56 were affixed directly between the frame 12 and the swing arm 32.

The linkage subassembly 50 is configured to be relatively compact and to keep a center of gravity of the vehicle 10 relatively low.

For example, the shock absorber 56 may extend lower than in conventional suspension assembly designs. This may be achieved for example by ensuring that the linking arm 54 and the shock absorber 56 are mounted to the frame 12 at relatively low points such that the linking arm pivot axes 74, 80 (defined by the pivots 72, 78) and the shock absorber pivot axis 90 (defined by the pivot 92) are positioned relatively close to a lower end of the frame. This may in turn lower a center of gravity of the frame 12. In this implementation, the shock absorber 56 extends generally horizontally in the full bump state of the suspension assembly 30. For instance, as shown in Figure 16, the axis 95 which extends through the shock absorber pivot axes 86, 90 defines a relatively small angle β with respect to a horizontal axis HA. In the full bump state of the suspension assembly 30, as shown in Figure 17, the angle β may be no more than 30°, in some cases no more than 20°, in some cases no more than 10°, and in some cases even less. In this case, "generally horizontally" refers to the angle β being offset no more than 30° from the horizontal axis HA.

Furthermore, the rocker link 52 extends relatively vertical. Notably, in this implementation, the second portion 68 of the rocker link 52 is vertically above the first portion 66 of the rocker link 52. More particularly, independently of the load state of the suspension assembly 30, the line L2 which passes through the shock absorber pivot axis 86 and the linking arm pivot axis 80 extends more vertically than horizontally. That is, as shown in Figure 16, the line L2 defines an angle α with respect to a vertical axis VA that can be relatively small. The angle α is less than 45° irrespective of the load state of the suspension assembly 30 (i.e., in the full bump, full droop and driver loaded states of the suspension assembly 30). Independent of the load state of the suspension assembly 30, the angle α may be no more than 30°, in some cases no more than 20°, and in some cases even less (e.g., 15°). In this case, "more vertically than horizontally" refers to the angle α between the line L2 and the vertical axis VA being less than 45°.

Moreover, the components of the linkage subassembly 50 are relatively close to one another laterally. Notably, as shown in Figures 14 and 15, in this implementation, the rocker link 52, the linking arm 54 and the shock absorber 56 are laterally aligned with one another. More specifically, the rocker link 52, the linking arm 54 and the shock absorber 56 extend through a common vertical plane VP.

In addition, in this implementation, only one of the rocker link 52, the linking arm 54 and the shock absorber 56 is connected to the frame 12. In particular, of the rocker link 52, the linking arm 54 and the shock absorber 56, only the linking arm 54 is connected to the frame 12. This results in a reduction of mount points on the frame 12 which may facilitate assembly of the suspension assembly 30.

In this implementation, as shown in Figure 16, the axis 95 extending through the shock absorber pivot axes 86, 90 intersects the linking arm pivot axis 74 independently of the load state of the suspension assembly 30. This may minimize bending of the linking arm 54.

In this implementation, the shock absorber 56 is disposed above the linking arm 54. This may be useful to protect the shock absorber 56 from damage by debris incoming from the ground. However, in other implementations, the positions of the shock absorber 56 and the linking arm 54 may be inverted (i.e., the shock absorber 56 may be disposed below the linking arm 54).

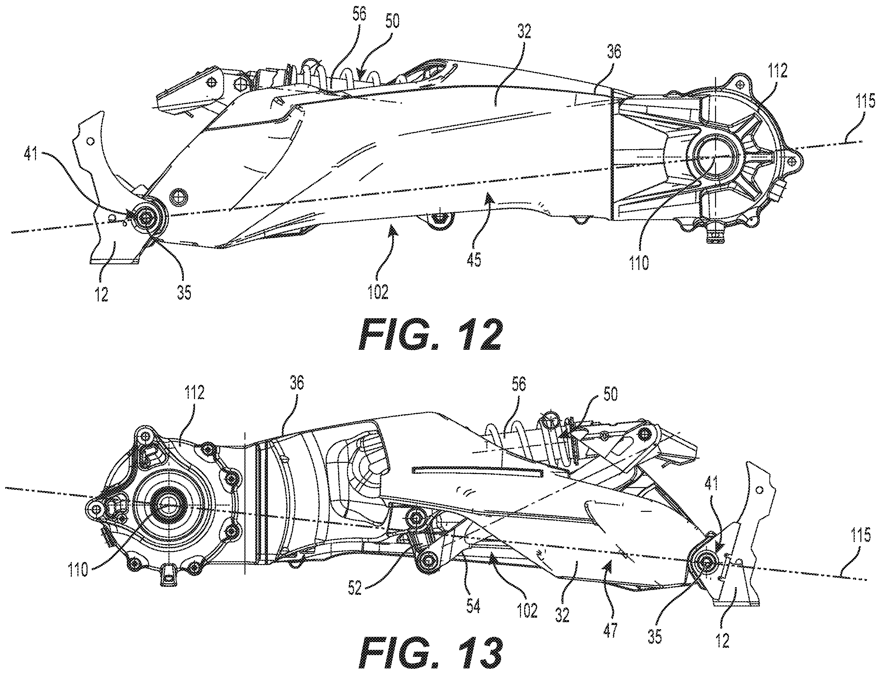

With reference to Figures 12, 13, 17 and 18, the linking arm 54 extends across a laterally extending plane 115 containing the swing arm pivot axis 35 and the wheel rotation axis 110. That is, the swing arm pivot axis 35 and the wheel rotation axis 110 extend along the plane 115 while the linking arm extends across the plane 115. As shown in Figures 17 and 18, the linking arm 54 extends across the plane 115 irrespective of the load state of the suspension assembly 30 (i.e., independent of whether the suspension assembly 30 is in its full bump state, full droop state or driver loaded state).

Given the compact configuration of the linkage subassembly 50, in this implementation, the swing arm 32 at least partially encloses the linkage subassembly 50. More particularly, as seen in Figures 10 to 13, the swing arm 32 is hollow and defines a space 102 between its walls in which the linkage subassembly 50 is disposed. In other words, each of the rocker link 52, the linking arm 54 and the shock absorber 56 at least partially extends within the space 102 defined by the swing arm 32.

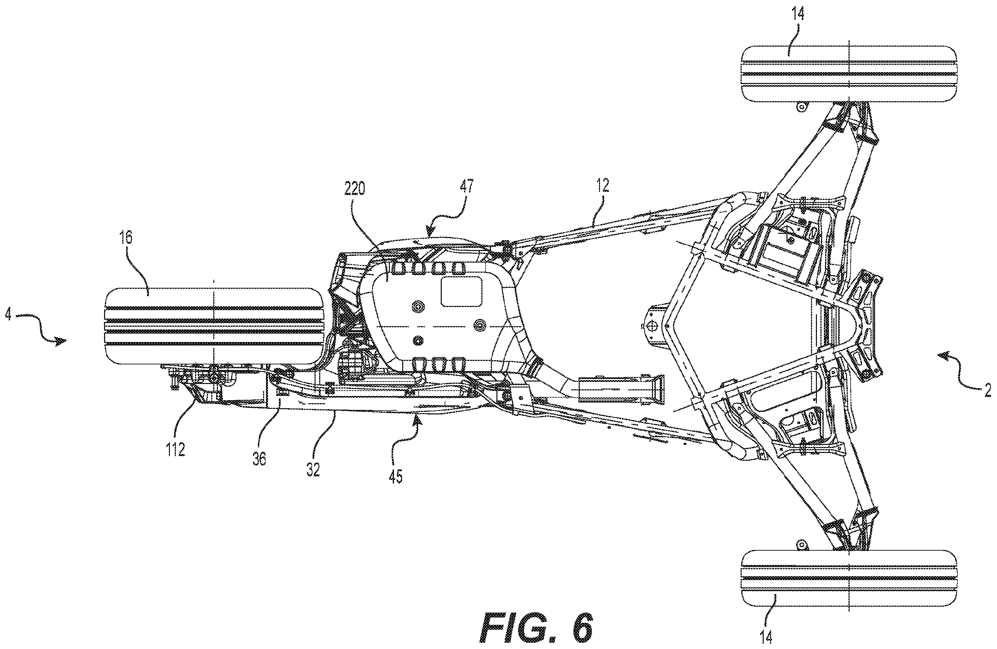

Moreover, the compact configuration of the linkage subassembly 50 allows the muffler 220 of the exhaust system to be positioned relatively low. Notably, since the linking arm pivot axis 74 is vertically higher than the swing arm pivot axis 35, this allows additional space below the linkage subassembly 50 for the muffler 220. In particular, as shown in Figures 6 to 9, the muffler 220 extends below the rocker link 52, the linking arm 54 and the shock absorber 56.

The suspension assembly 30 may be configured differently in other implementations.

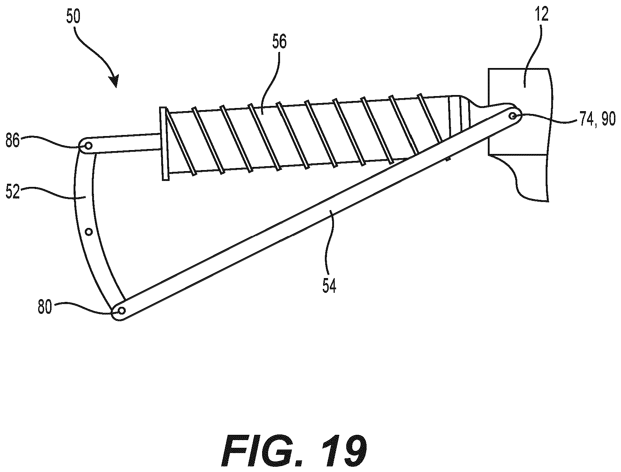

For instance, in the implementation shown in Figure 19, each of the shock absorber 56 and the linking arm 54 is pivotally connected to the frame 12 about a common pivot axis. In other words, in this example, the linking arm pivot axis 74 about which the linking arm 54 is pivotally connected to the frame 12, and the shock absorber pivot axis 90 about which the shock absorber 56 is pivotally connected to the linking arm 54 are coaxial.

While in the implementations described above the suspension assembly 30 supports the rear wheel 16, the suspension assembly 30 may support any other suitable ground-engaging member in other implementations. For example, in the not claimed case where the suspension assembly 30 is implemented as a front suspension assembly of a snowmobile, a ski is connected to the distal end 36 of the swing arm 32 instead of a wheel. In such a case, the drive components of the wheel 16, such as the final drive unit 112 and the driveshaft 208, would not be implemented.

## Claims

1. A suspension assembly (30) for a three-wheeled straddle-type vehicle (10), comprising:
a swing arm (32) having a proximal end (34) and a distal end (36), the proximal end of the swing arm being configured to be pivotally connected to a frame (12) of the vehicle about a swing arm pivot axis (35), the distal end of the swing arm being configured to support a ground-engaging member (16) of the vehicle;
a rocker link (52) pivotally connected to the swing arm about a rocker link pivot axis (60), the rocker link having a first portion (66) and a second portion (68) extending in divergent directions from the rocker link pivot axis;
a linking arm (54) configured to be pivotally connected to the frame of the vehicle about a first linking arm pivot axis (74), the linking arm being pivotally connected to the first portion of the rocker link about a second linking arm pivot axis (80); and
a shock absorber being pivotally connected to the second portion of the rocker link about a second shock absorber pivot axis (86), **characterised in that** the shock absorber (56) is pivotally connected to the linking arm about a first shock absorber pivot axis (90),
wherein a distance (D1) between the second shock absorber pivot axis and the rocker link pivot axis is different and greater than a distance (D2) between the second linking arm pivot axis and the rocker link pivot axis.

2. The suspension assembly of claim 1, wherein, when the suspension assembly is in a driver loaded state, a distance between the first linking arm pivot axis and the second linking arm pivot axis is greater than a distance between the first shock absorber pivot axis and the second shock absorber pivot axis.

3. The suspension assembly of claim 1, wherein, independent of a load state of the suspension assembly, an axis (L2) passing through the second shock absorber pivot axis and the second linking arm pivot axis extends more vertically than horizontally.

4. The suspension assembly of claim 1, wherein the first linking arm pivot axis is vertically higher than the swing arm pivot axis.

5. The suspension assembly of claim 1, wherein an axis (95) extending through the first shock absorber pivot axis and the second shock absorber pivot axis intersects the first linking arm pivot axis.

6. The suspension assembly of claim 1, wherein the shock absorber is disposed above the linking arm.

7. The suspension assembly of claim 1, wherein the second portion of the rocker link is vertically above the first portion of the rocker link.

8. The suspension assembly of claim 1, wherein the rocker link, the linking arm and the shock absorber extend through a common vertical plane (VP).

9. A three-wheeled straddle-type vehicle, comprising:
the frame;
the suspension assembly of claim 1; and
the ground-engaging member connected to the distal end of the swing arm of the suspension assembly.

10. The three-wheeled straddle-type vehicle of claim 9, wherein:
the ground-engaging member is a wheel having a wheel rotation axis (110);
the swing arm pivot axis and the wheel rotation axis extend along a plane (115); and
the linking arm extends across the plane.

## Patentansprüche

1. Aufhängungsanordnung (30) für ein dreirädriges Grätschsitzfahrzeug (10), umfassend:
einen Schwingarm (32) mit einem proximalen Ende (34) und einem distalen Ende (36), wobei das proximale Ende des Schwingarms so konfiguriert ist, dass es um eine Schwingarm-Schwenkachse (35) schwenkbar mit einem Rahmen (12) des Fahrzeugs verbunden ist, und wobei das distale Ende des Schwingarms so konfiguriert ist, dass es ein Bodenkontakt-Element (16) des Fahrzeugs trägt;
einen Umlenkhebel (52), der über eine Umlenkhebel-Schwenkachse (60) schwenkbar mit dem Schwingarm verbunden ist, wobei der Umlenkhebel einen ersten Abschnitt (66) und einen zweiten Abschnitt (68) aufweist, die in divergierende Richtungen von der Umlenkhebel-Schwenkachse weg verlaufen;
einen Verbindungsarm (54), der so konfiguriert ist, dass er über eine erste Verbindungsarm-Schwenkachse (74) schwenkbar mit dem Rahmen des Fahrzeugs verbunden ist, wobei der Verbindungsarm über eine zweite Verbindungsarm-Schwenkachse (80) schwenkbar mit dem ersten Abschnitt des Umlenkhebels verbunden ist; und
eine Stoßdämpfer, der über eine zweite Stoßdämpfer-Schwenkachse (86) schwenkbar mit dem zweiten Abschnitt des Umlenkhebels verbunden ist, **dadurch gekennzeichnet, dass** der Stoßdämpfer (56) über eine erste Stoßdämpfer-Schwenkachse (90) schwenkbar mit dem Verbindungsarm verbunden ist,
wobei sich der Abstand (D1) zwischen der zweiten Stoßdämpfer-Schwenkachse und der Umlenkhebel-Schwenkachse von dem Abstand (D2) zwischen der zweiten Verbindungsarm-Schwenkachse und der Umlenkhebel-Schwenkachse unterscheidet und größer als dieser ist.

2. Aufhängungsanordnung nach Anspruch 1, wobei, wenn sich die Aufhängungsanordnung in einem mit dem Fahrer belasteten Zustand befindet, ein Abstand zwischen der ersten Verbindungsarm-Schwenkachse und der zweiten Verbindungsarm-Schwenkachse größer ist als ein Abstand zwischen der ersten Stoßdämpfer-Schwenkachse und der zweiten Stoßdämpfer-Schwenkachse.

3. Aufhängungsanordnung nach Anspruch 1, wobei unabhängig vom Belastungszustand der Aufhängungsanordnung eine Achse (L2), die durch die zweite Stoßdämpfer-Schwenkachse und die zweite Verbindungsarm-Schwenkachse verläuft, sich mehr vertikal als horizontal erstreckt.

4. Aufhängungsanordnung nach Anspruch 1, wobei die erste Verbindungsarm-Schwenkachse vertikal höher liegt als die Schwingarm-Schwenkachse.

5. Aufhängungsanordnung nach Anspruch 1, wobei eine Achse (95), die sich durch die erste Stoßdämpfer-Schwenkachse und die zweite Stoßdämpfer-Schwenkachse erstreckt, sich mit der ersten Verbindungsarm-Schwenkachse überkreuzt.

6. Aufhängungsanordnung nach Anspruch 1, wobei der Stoßdämpfer oberhalb des Verbindungsarms angeordnet ist.

7. Aufhängungsanordnung nach Anspruch 1, wobei der zweite Abschnitt des Umlenkhebels vertikal über dem ersten Abschnitt des Umlenkhebels angeordnet ist.

8. Aufhängungsanordnung nach Anspruch 1, wobei sich der Umlenkhebel, der Verbindungsarm und der Stoßdämpfer in einer gemeinsamen vertikalen Ebene (VP) erstrecken.

9. Dreirädriges Grätschsitzfahrzeug, umfassend:
den Rahmen,
die Aufhängungsanordnung nach Anspruch 1 und
das mit dem distalen Ende des Schwingarms der Aufhängungsanordnung verbundene Bodenkontakt-Element.

10. Dreirädriges Grätschsitzfahrzeug nach Anspruch 9, wobei:
das Bodenkontakt-Element ein Rad mit einer Raddrehachse (110) ist;
die Schwingarm-Schwenkachse und die Raddrehachse sich in einer Ebene (115) erstrecken; und
der Verbindungsarm sich über die Ebene erstreckt.

## Revendications

1. Ensemble de suspension (30) pour un véhicule à trois roues (10) du type à enfourcher, comprenant :
un bras oscillant (32) comportant une extrémité proximale (34) et une extrémité distale (36), l'extrémité proximale du bras oscillant étant conçue pour être reliée de manière pivotante à un châssis (12) du véhicule autour d'un axe de pivotement (35) du bras oscillant, l'extrémité distale du bras oscillant étant conçue pour supporter un élément (16) destiné à entrer en contact avec le sol du véhicule ;
un basculeur (52) relié de manière pivotante au bras oscillant autour d'un axe de pivotement (60) du basculeur, le basculeur comportant une première partie (66) et une seconde partie (68) s'étendant dans des directions divergentes à partir de l'axe de pivotement du basculeur ;
un bras de liaison (54) conçu pour être relié de manière pivotante au châssis du véhicule autour d'un premier axe de pivotement (74) du bras de liaison, le bras de liaison étant relié de manière pivotante à la première partie du basculeur autour d'un second axe de pivotement (80) du bras de liaison ; et
un amortisseur étant relié de manière pivotante à la seconde partie du basculeur autour d'un second axe de pivotement (86) de l'amortisseur, **caractérisé en ce que** l'amortisseur (56) est relié de manière pivotante au bras de liaison autour d'un premier axe de pivotement (90) de l'amortisseur,
dans lequel une distance (D1) entre le second axe de pivotement de l'amortisseur et l'axe de pivotement du basculeur est différente et plus grande qu'une distance (D2) entre le second axe de pivotement du bras de liaison et l'axe de pivotement du basculeur.

2. Ensemble de suspension selon la revendication 1, dans lequel, lorsque l'ensemble de suspension est dans un état chargé avec le conducteur, une distance entre le premier axe de pivotement du bras de liaison et le second axe de pivotement du bras de liaison est plus grande qu'une distance entre le premier axe de pivotement de l'amortisseur et le second axe de pivotement de l'amortisseur.

3. Ensemble de suspension selon la revendication 1, dans lequel, indépendamment d'un état chargé de l'ensemble de suspension, un axe (L2) traversant le second axe de pivotement de l'amortisseur et le second axe de pivotement du bras de liaison s'étend plus verticalement qu'horizontalement.

4. Ensemble de suspension selon la revendication 1, dans lequel le premier axe de pivotement du bras de liaison est verticalement plus haut que l'axe de pivotement du bras oscillant.

5. Ensemble de suspension selon la revendication 1, dans lequel un axe (95) s'étendant à travers le premier axe de pivotement de l'amortisseur et le second axe de pivotement de l'amortisseur coupe le premier axe de pivotement du bras de liaison.

6. Ensemble de suspension selon la revendication 1, dans lequel l'amortisseur est disposé au-dessus du bras de liaison.

7. Ensemble de suspension selon la revendication 1, dans lequel la seconde partie du basculeur est verticalement au-dessus de la première partie du basculeur.

8. Ensemble de suspension selon la revendication 1, dans lequel le basculeur, le bras de liaison et l'amortisseur s'étendent à travers un plan vertical (PV) commun.

9. Véhicule à trois roues du type à enfourcher, comprenant :
le châssis ;
l'ensemble de suspension selon la revendication 1 ; et
l'élément destiné à venir en contact avec le sol relié à l'extrémité distale du bras oscillant de l'ensemble de suspension.

10. Véhicule à trois roues du type à enfourcher selon la revendication 9, dans lequel :
l'élément destiné à venir en contact avec le sol est une roue comportant un axe de rotation (110) de la roue ;
l'axe de pivotement du bras oscillant et l'axe de rotation de la roue s'étendent le long d'un plan (115) ; et
le bras de liaison s'étend sur l'ensemble du plan.
